# EUROPÄISCHE PATENTSCHRIFT

(11) **EP 2 951 001 B1**
(45) Veröffentlichungstag und Bekanntmachung des Hinweises auf die Patenterteilung: **27.01.2021**
(21) Anmeldenummer: 14701773.5
(22) Anmeldetag: 30.01.2014
(51) Int. Cl.: B29C 49/48, B29C 49/64, B65D 1/02, B29C 49/06, B29B 11/14

(54) **VERFAHREN ZUR HERSTELLUNG EINES BLASGEFORMTEN KUNSTSTOFFBEHÄLTERS UND EINEN DIESBEZÜGLICHEN KUNSTSTOFFBEHÄLTER**
PROCESS FOR PRODUCING A BLOW-MOULDED PLASTIC CONTAINER AND SUCH A PLASTIC CONTAINER
PROCÉDÉ DE FABRICATION D'UN RÉCIPIENT EN MATIÈRE PLASTIQUE MOULÉ PAR SOUFFLAGE ET RÉCIPIENT EN MATIÈRE PLASTIQUE CORRESPONDANT

(30) Priorität: 30.01.2013 CH 3712013
(43) Veröffentlichungstag der Anmeldung: 09.12.2015
(73) Patentinhaber: Alpla-Werke Alwin Lehner GmbH und Co.KG, 6971 Hard (AT)
(72) Erfinder: SIEGL, Robert, 6850 Dornbirn (AT)
(74) Vertreter: Riederer Hasler & Partner Patentanwälte AG
(86) Internationale Anmeldenummer: PCT/EP2014/051799
(87) Internationale Veröffentlichungsnummer: WO 2014/118274

(56) Entgegenhaltungen:
- EP-A1- 0 751 071
- EP-A1- 0 870 592
- WO-A1-2011/056176
- JP-U- S62 144 612
- US-A- 3 956 441
- US-A- 4 287 150
- US-A- 4 863 046
- US-A- 5 205 434
- US-A- 5 455 088
- DATABASE WPI Week 199517 Thomson Scientific, London, GB; AN 1995-127827 XP002699149, & JP H07 52234 A (DENKI KAGAKU KOGYO KK) 28. Februar 1995 (1995-02-28)

## Beschreibung

Die Erfindung betrifft ein Verfahren zur Herstellung eines blasgeformten Kunststoffbehälters gemäss Anspruch 1 und eines Kunststoffbehälters mit Verstärkungselementen gemäß Anspruch 4.

### Stand der Technik:

Kunststoffflaschen und dergleichen Behälter aus Kunststoff werden in sehr hohen Stückzahlen hergestellt und sind daher ständig Gegenstand von Optimierungen, um Kosten einzusparen. Aus Kostengründen, aber auch aus ökologischen Gründen wird daher versucht, Material einzusparen. Dabei ist jedoch immer auch die erforderliche Steifigkeit der Kunststoffflaschen zu berücksichtigen. Diese setzt bei als Kunststoffflaschen ausgebildeten Kunststoffbehältern mit einem Füllvolumen von 50 ml bis 3000 ml den Bemühungen der Techniker und Designer Grenzen.

PET Flaschen erlauben durch die hohe Festigkeit des verstreckten PET Materials sehr dünne Wandstärken zwischen 0,1 und 0,5mm. Diese hohe Festigkeit erlaubt es, selbst sehr dünnwandige Flaschen mit einem CO2 oder Stickstoffüberdruck zu füllen, ohne dass diese übermäßig deformieren. Beispiele für solche Flaschen sind zahlreiche Bier-, Mineralwasser- und Softdrinkanwendungen mit einem CO₂-Innendruck, als auch zahlreiche Eistee-, Saft- oder Mineralwasseranwendungen mit einem Stickstoff-Innendruck, so wie diese derzeit in den Verkaufsregalen von entsprechenden Einzelhändlern stehen.

Diese Innendruckbelastung ist für den zylindrischen Teil der Flasche meist strukturell kein Problem. Entweicht jedoch der Innendruck, weil der Konsument die Flasche geöffnet hat, ist die Flasche nach dem Druckausgleich strukturell durch die dünne Wandstärke extrem labil und deformiert sehr leicht in der Hand des Konsumenten.

Versteifende Rillenstrukturen, die diese durch den Innendruck verursachten Kräfte aufnehmen sollen, führen unter dem Innendruck, ähnlich einem Harmonium zu einer Expansion der Flasche. Trotzdem werden diese Rillen intensiv eingesetzt, da der Konsument die Flasche in geöffnetem Zustand kaum halten kann.

Diese Innendruckbelastung wäre für einen Kunststoffbehälter, respektive eine Kunststoffflasche, mit einem kugelförmigen Boden auch kein Problem, jedoch ist der Boden einer PET Flasche, damit dieser sicher stehen kann, meist nicht kugelförmig ausgebildet.

Versteifende Rillenstrukturen, die einen flachen Boden verstärken sollen, sind Stand der Technik. Unabhängig davon, ob es sich um Schulter-, Körper- oder Bodenbereich der Flasche handelt, Rillen sind derzeit der gängige Weg, Flaschen zu verstärken, obwohl Rillenstrukturen auch Nachteile haben.

Anstelle von Rillen können zur Verstärkung des Flaschenkörpers auch Rippen an jenen Stellen, an denen die Flasche maximal belastet wird, eingebracht werden. Rippen statt Rillen in eine Flasche einzubringen ist technisch über einen gerippten Preform durchaus möglich, erlaubt jedoch nur die Herstellung von solchen Rippen, die im Spritzguß einfach entformt werden können. Obwohl dies bereits seit 1969 bekannt ist, wird diese Technologie heute in der Massenfertigung nicht mehr eingesetzt.

Beim Streckblasvorgang wird ein erwärmter Preform in eine Kavität einer Blasform geblasen und dabei gleichzeitig mit einem Streckdorn der Länge nach gereckt. Beim Blasvorgang wird zunächst eine Vorblase generiert und diese Vorblase wird danach beim Hauptblasen in die endgültige Flaschenform umgewandelt.

Der Boden einer Kunststoffflasche muss einerseits für einen guten Stand der Flasche sorgen und andererseits dem Druck von karbonisierten Getränken standhalten. Für die Bodenkonstruktion sind unterschiedlichste Bodenformen bekannt, die durch unterschiedliche Strukturen und Wandstärken ihre Druckbeständigkeit erlangen. Insbesondere hat sich ein Boden mit 5 bis 7 Standfüßchen für die meisten Softdrinkanwendungen durchgesetzt, die typischerweise mit 4 bis 10g/l CO₂ karbonisiert werden. Je nach Wechselwirkung mit dem Füllgut und Druckausgleich mit dem füllgutfreien Kopfraum weist die Flasche in geschütteltem Zustand einen Innendruck von 2 bis 6 bar bei Raumtemperatur auf, der sich jedoch im ungeschüttelten Zustand rasch durch intensive Bindung mit dem Füllgut auf Drücke von 1 bis 5 bar bei Raumtemperatur absenkt.

Durch die WO 2012/038075 ist eine Bodenkonstruktion für eine Kunststoffflasche offenbart, umfassend einen ringförmigen als Standfläche ausgebildeten Randabschnitt, der einstückig mit der Seitenwand der Flasche ausgebildet ist, und einen vom Randabschnitt umgebenen und mit diesem aus einem Stück bestehenden konkaven Boden mit sternförmig angeordneten Verstärkungselementen. Die Verstärkungselemente sind durch nach außen gewölbte Bereiche gebildet, welche eine im Wesentlichen gleiche Wandstärke aufweisen wie der konkave Boden. Ein wesentliches Kennzeichen dieser Bodenkonstruktion ist also, dass die Versteifungselemente an keiner Stelle zu Materialverdickungen führen, da diese lediglich von nach außen gewölbten Bereichen des konkaven Bodenabschnitts gebildet sind.

Die DE-OS-1 801 368 zeigt einen Boden für Kunststoffflaschen, welche für die Lagerung von unter Druck stehenden Getränken ausgelegt ist. Offenbart werden verschiedene Ausführungen von konkaven Flaschenböden, welche durch Rippen verstärkt sind. Die Flaschen weisen einen kreisförmigen, konvexen Randabschnitt und einen kreisrunden mittleren Teil auf, wobei Randabschnitt und mittlerer Teil durch mehrere radial verlaufende Rippen miteinander verbunden sind. Die Rippen besitzen im Querschnitt die Gestalt eines sehr spitzwinkligen, gleichschenkligen Dreiecks mit einer außenliegenden Kante, die sich geradlinig erstreckt. Die Herstellung eines solchen Bodens setzt einen Preform voraus, bei welchem der Boden mit den Verstärkungsrippen bereits fertig ausgebildet ist.

Das US Patent 7,732,035 B2 beschreibt einen Boden für eine Kunststoffflasche, welcher hohen Innendrücken standhalten soll. Die Kunststoffflasche besitzt einen äußeren ringförmigen Abschnitt, welcher als Standfläche für die Flasche dient, einen ringförmigen zentralen Abschnitt, und einen Bodenabschnitt, welcher den äußeren ringförmigen und den zentralen Abschnitt miteinander verbindet. Der Bodenabschnitt besteht aus konkaven und konvexen Bodenabschnitten, welche abwechselnd nebeneinander angeordnet sind. Die konkaven und konvexen Bodenabschnitte erstrecken sich in radialer Richtung vom zentralen Abschnitt bis zum äußeren ringförmigen Abschnitt. In den konkaven Bodenabschnitten sind gestufte Segmente ausgebildet, wobei die erste Stufe, welche sich nächst zum zentralen Abschnitt befindet, die größte vertikale Höhe hat. Die konvexen Bodenabschnitte können im Schnitt gleichmäßig gekrümmt sein oder nächstliegend zum äußeren ringförmigen Abschnitt einen abgestuften ringförmigen Abschnitt aufweisen. Das US Patent 7,732,035 B2 macht keine Aussagen zu den Materialstärken, sodass davon ausgegangen werden muss, dass diese in den konkaven und konvexen Bodenabschnitten gleichmäßig verteilt sind.

US Patent Nr. 3,956,441 offenbart einen Kunststoffbehälter mit inneren Verstärkungsrippen, die durch einen zweistufigen Blasprozess in zwei verschiedenen Blasformen erhalten werden. Dazu wird in einem Vorblasprozess ein Preform zu einem vorgeblasenen Preform aufgeblasen und in Kontakt mit der Wandung einer ersten Blasform gebracht, die ungefähr in der Mitte eine Mehrzahl von konkaven Rillen hat. Beim vorgeblasenen Preform bilden sich so konvexe, nach aussen vorstehende Rippen. Der vorgeblasene Preform wird dann in eine zweite Blasform mit glatten Oberflächen eingelegt und fertig zu einem Kunststoffbehälter aufgeblasen. Bei diesem zweiten Vorgang werden die konvexen Rippen geglättet, sodass sich konkave Abschnitte zwischen konvexen, nach innen orientierten Verstärkungsrippen ergeben, d.h. dass die äussere Oberfläche glatt ist.

US Patent Nr. 5,455,088 offenbart einen Vorformling zur Herstellung einer blasgeformten Plastikflasche, dessen kuppelartiges Ende mit einer Mehrzahl von in Abstand voneinander angeordneten Rippen versehen ist. Zwischen den Rippen befinden sich Täler mit einer um ca. 30% geringeren Materialstärke. Oberhalb der Rippen befindet sich ein verdickter Ringabschnitt, der zwischen 105% und 135% so dick ist wie der übrige Bereich des Vorformlingkörpers. Beim Aufblasen des Vorformlings zu einer Flasche wandert der verdickte Ringabschnitt nach unten und aussen und bildet bei voll aufgeblasener Flasche eine ringförmige Standfläche mit erhöhter Materialansammlung. Die Rippen hingegen erstrecken sich zwischen der Standfläche bis in die Nähe des zentralen Anspritzpunktes. Durch das spezielle Design des Vorformlings kann eine verstärkte Bodenstruktur mit einer reduzierten Menge Kunststoff erreicht werden.

Die JP S62 144612 offenbart einen Vorformling, dessen hinterer Abschnitt mit dem Boden ebenfalls mit in Längsrichtung des Vorformlings sich erstreckenden Verdickungen ausgestattet ist. Diese Verdickungen bleiben in entsprechend abgeschwächter Form auch beim fertig geblasenen Behälter erhalten.

US Patent Nr.4,287,150 beschreibt einen Prozess, in welchem zuerst eine Spritzgiessform bereitgestellt wird, die in der Oberfläche feine Strukturen, wie beispielsweise lesbare Buchstaben, als Vertiefungen eingearbeitet hat. Beim Spritzgiessen wird sodann ein entsprechender Vorformling hergestellt, dessen Oberfläche dieselben feinen Strukturen als Erhöhungen aufweist. In einem zweiten Verfahrensschritt wird der Vorformling dann zu einem Behälter aufgeblasen, wobei die Blasform so ausgebildet ist, dass die feinen Strukturen erhalten bleiben.

Die EP-A-0 870 592 beschreibt ein Verfahren, in dem zuerst ein Vorformling hergestellt wird, der an der Aussenseite erste Markierungen, z.B. ringförmige Rippen, aufweist. Der Vorformling wird sodann in einer Blasform, die an der Oberfläche zweite Markierungen aufweist, zu einem blasgeformten Artikel aufgeblasen wird. Aus dem Abstand der ersten und zweiten Markierungen voneinander kann darauf geschlossen werden, ob bestimmte Kriterien, wie beispielsweise Wandstärke, eingehalten sind.

WO 2011/056176 offenbart einen Vorformling, der an der Innen- oder Aussenseite bereits mit länglichen Verstärkungsrippen ausgestattet ist. Beim Aufblasen des Vorformlings bleiben etwas geglättete Verstärkungsrippen an der Innen- oder Aussenseite des fertigen Behälters erhalten.

Dem zuletzt beschriebenen Stand (US 5,455,088, JP S62 144612, US 4,287,150, EP-A-0 870 592, WO 2011/056176) Stand der Technik ist gemeinsam, dass Vorformlinge eingesetzt werden, deren Wandung bereits eine Struktur (Verdickungen, Rillen) aufweisen.

### Aufgabe

Es ist deshalb ein Ziel der vorliegenden Erfindung, einen Kunststoffbehälter vorzuschlagen, welcher einem hohen Innendruck standhalten kann. Ein weiteres Ziel ist es, den Behälterkörper- und/oder den Boden des Kunststoffbehälters an den maximal beanspruchten Stellen stabiler zu gestalten. Ein weiteres Ziel ist es, einen Kunststoffbehälter zu schaffen, welcher mit den bestehenden Herstellverfahren herstellbar ist und die erforderliche Steifigkeit aufweist.

### Beschreibung

Diese und weitere Ziele werden durch ein Verfahren gemäß Anspruch 1 und durch einen Kunststoffbehälter gemäß Anspruch 4 erreicht. Vorteilhafte Ausgestaltungen des erfindungsgemässen Verfahrens und des diesbezüglichen Kunststoffbehälters sind in den Unteransprüchen definiert.

Erfindungsgemäss wird eine Blasform bereitgestellt, deren Kavität an einer zu verstärkenden Stelle des Kunststoffbehälters wenigstens eine Rille aufweist. Der Preform wird vor dem Blasprozess so erwärmt, dass der mit der wenigstens einen Rille der Kavität korrelierende erste Wandabschnitt beim Recken und/oder Vorblasen weniger ausgedünnt wird als der zweite Wandabschnitt. Beim Hauptblasen wird eine Anhäufung von Kunststoffmaterial durch den ersten Wandabschnitt in der wenigstens einen Rille bewirkt. Die Tatsache, dass der Kunststoff sich beim Streckblasen in der Rille ansammelt ist überraschend und wurde auch von den eingesetzten Simulationsprogrammen nicht vorhergesehen. Erwartet wurde auf Basis von Simulationen vielmehr, dass sich das Material beim Blasen in den Rillen deutlich ausdünnt oder dass die Wandstärken der nach außen gewölbten Bereiche und des übrigen Bodens im Wesentlichen die gleiche Wandstärke aufweisen würden, wie dies auch bei der Kunststoffflasche der eingangs zitierten WO 2012/038075 der Fall ist. Das erfindungsgemäße Verfahren hat den Vorteil, dass die eingesetzten Preforms die übliche Gestalt mit glatten Oberflächen, d.h. ohne Strukturierungen wie Verdickungen oder Rillen, haben können und nicht - wie dies beim Verfahren der DE-OS-1 801 368 der Fall ist - einen Boden mit der endgültigen Bodenkonstruktion bereits aufweisen müssen. Ein Preformkörper kann an den Transferring angrenzen und sich in entgegengesetzter Richtung wie der Hals erstrecken. Der Preformkörper kann an dem fertig geblasenen Kunststoffbehälter einen Kunststoffkörper bilden, der zur Aufnahme der zu bevorratenden Flüssigkeit ausgebildet ist. Der Preformkörper ist an seiner Außenseite strukturlos. Das bedeutet, dass der Preformkörper an seiner Außenseite keine Vorsprünge oder Hinterschneidungen aufweist. Dadurch ist der Preformkörper in einer einteiligen Kavität fertigbar, da die Kavität zur Entnahme des Preformkörpers nicht geteilt werden muss. Ferner ist eine der Außenseite des Preformkörpers gegenüberliegende Innenseite des Preformkörpers ebenfalls strukturlos, also frei von Vorsprüngen und Hinterschneidungen. Ferner kann die Innenseite oval, elliptisch oder kreisförmig ausgebildet sein. Im Sinne dieser Erfindung bedeutet oval, dass die geometrische Form, die sich durch einen Schnitt an beliebiger Stelle senkrecht zur Mittelachse des Preformkörpers ergibt, nur in einer Linkskurve bzw. in einer Rechtskurve durchlaufen werden kann, wobei gerade Abschnitte zulässig sind. Die geometrische Form besitzt demnach keine Einbuchtungen. Wanddickenvergrößerungen zwischen der Innenseite und der Außenseite des Preformkörpers können entlang der Mittelachse des Preformkörpers mit zunehmendem Abstand von dem Transferring ausgebildet sein. Hierdurch kann der Dorn, um dessen geometrische Außenwandung die Innenseite des Preformkörpers ausgebildet wird, einfach ausgebildet sein und benötigt keine Einsätze, die die Außenwandung des Dorns zumindest partiell verändern, wie dies notwendig wäre, wenn die Wanddicke des Preformkörpers nur partiell verändert wäre. Dies reduziert die Herstellungskosten für den Preform sowie für das den Preform herstellende Werkzeug ganz wesentlich. Der Preform ist in der Regel ein Spritzgießteil und damit aus spritzgießfähigem Kunststoffmaterial hergestellt, dessen Hauptbestandteil in der Regel Polyester ist. Das Kunststoffmaterial kann beispielsweise Polyethylenterephtalat (PET) oder Polyethylenfuranoat (PEF) sein. Auch kann der Preform derart gestaltet sein, dass der erste Wandabschnitt eine erste Wanddicke und der zweite Wandabschnitt eine zweite Wanddicke aufweisen, wobei die beiden Wandstärken gleich dick sein können. In einem solchen Fall können in einem Ofen zum Erwärmen des Preforms dem ersten Wandabschnitt und dem zweiten Wandabschnitt voneinander unterschiedliche Wärmemengen zugeführt werden, so dass beim Vorblasen und/oder Recken des erwärmten Preforms zu einer Vorblase der erste Wandabschnitt und der zweite Wandabschnitt voneinander unterschiedlich gestreckt werden. In der Regel wird der zweite Wandabschnitt stärker erwärmt als der erste Wandabschnitt, so dass beim Strecken und/oder Vorblasen in der Kavität der zweite Wandabschnitt stärker gereckt wird als der erste Wandabschnitt und dementsprechend der erste Wandabschnitt nach dem Strecken und/oder Vorblasen eine erste Wanddicke aufweisen kann, die größer als die zweite Wanddicke ist. Auch kann der Preform derart gestaltet sein, dass der erste Wandabschnitt eine erste Wanddicke und der zweite Wandabschnitt eine zweite Wanddicke aufweisen, wobei die beiden Wandstärken unterschiedlich dick sein können. Hierbei können in dem Ofen dem ersten Wandabschnitt und dem zweiten Wandabschnitt die gleiche Wärmemenge zugeführt werden. Beim Vorblasen und/oder Recken des erwärmten Preforms zu einer Vorblase werden der erste Wandabschnitt und der zweite Wandabschnitt voneinander unterschiedlich gestreckt, da die erste Wanddicke und die zweite Wanddicke aufgrund ihrer unterschiedlichen Wanddicken unterschiedlich stark erwärmt wurden. Natürlich können auch Preforms mit unterschiedlich dicken Wandstärken auch mit unterschiedlichen Wärmemengen beaufschlagt werden, wobei in der Regel dem ersten Wandabschnitt eine geringere Wärmemenge zugeführt wird als dem zweiten Wandabschnitt.

Vorteilhaft wird eine Blasform mit Rillen mit einer Breite von maximal 10 mm Breite, vorzugsweise maximal 7 mm Breite und besonders bevorzugt maximal 5 mm Breite bereitgestellt. Dabei sollen die Rillen eine Tiefe von maximal 6 mm, vorzugsweise maximal 5 mm und besonders bevorzugt maximal 4 mm haben. Mit Rillen solcher Dimensionen können in einem konventionellen Streckblasprozess Materialverdickungen in den Rillen erzeugt werden, die im fertigen Produkt als nach außen gewölbte Materialwulste aus Kunststoff in Erscheinung treten.

Gegenstand der vorliegenden Erfindung ist auch ein blasgeformter Kunststoffbehälter, z.B. ein Aerosolbehälter, insbesondere für unter einem Innendruck stehende Getränke oder Flüssigkeiten, mit einem Behälterboden, einem an den Behälterboden anschließenden Behälterkörper und einem den Behälterkörper abschließenden Hals mit einer Öffnung, wobei der Hals dem Behälterboden im Wesentlichen gegenüberliegt. Wenigstens eine Komponente aus der Gruppe von Behälterkörper und Behälterboden weist wenigstens ein Verstärkungselement mit einer ersten Wanddicke auf.

Erfindungsgemäss ist das wenigstens eine Verstärkungselement als ein nach außen ragender Materialwulst ausgebildet, wobei die erste Wanddicke wenigstens 30%, vorzugsweise wenigstens 50% und besonders bevorzugt wenigstens 70% grösser als eine zweite Wanddicke eines an den wenigstens einen Materialwulst angrenzenden Wandungsbereichs der Komponente ist. Dadurch, dass die Wanddicke oder Materialstärke des wenigstens einen Materialwulsts deutlich grösser als die Wanddicke des seitlich angrenzenden Wandungsbereichs ist, kann eine signifikante Verstärkung des Behälterkörpers und/ oder des Behälterbodens erreicht werden. Je nach Heizprofil des Preforms kann man Bereiche des Preforms sowohl beim Strecken als auch beim Vorblasen gezielt dick lassen, und dadurch gezielt Dickstellen im Behälterkörper erzeugen. Als besonders druckresistent haben sich Rippen herausgestellt, die ähnlich dem menschlichen Brustkorb gekrümmt sind. Der Materialwulst hat zumindest eine Wandstärke, die mindestens 50% größer ist als die zweite Wanddicke. Die maximale Wandstärke der Rippe ist an ihrer höchsten Stelle, also in der Regel in der Mitte des Rippenquerschnitts zu messen.

Anders als bei der WO 2012/038075 A1, in welcher durch den normalen Hauptblasprozeß der konkave Abschnitt einschließlich der nach außen gewölbten Bereiche mit einer im Wesentlichen gleichmäßigen Wandstärke ausgebildet wird, ergeben sich nach der Erfindung Materialwulste oder Rippen aus Vollmaterial.

Die Messung der Dicke des wenigstens einen Materialwulsts erfolgt bei länglichen Verstärkungselementen einer vorbestimmten Länge ungefähr in der Mitte, und die Wandstärke der seitlich angrenzenden Wandungsbereiche entsprechend daneben. Die Wandstärke der seitlich angrenzenden Wandungsbereiche ist in der Regel in einem Abstand zwischen 2 und 10 mm neben dem Materialwulst zu bestimmen. Sind mehrere Materialwulste nebeneinander vorgesehen, so erfolgt die Bestimmung der Wandstärke der seitlich angrenzenden Wandungsbereiche an ihrer dünnsten Stelle, also in der Regel in der Mitte zwischen den Materialwulsten. Alternativ kann die Bestimmung der Dicke der Materialwulste im mittleren Drittel erfolgen, wobei bei unterschiedlichen Dicken ein Durchschnitt (arithmetisches Mittel) ermittelt wird. Analog wird bei der Bestimmung der Materialstärken der seitlich angrenzenden Wandungsbereiche verfahren.

Das Streckverhältnis ist 1,5 bis 3,5, bevorzugt 2,0 bis 3,5 oder 2,5 bis 3,5. Streckverhältnis im Sinne der Erfindung ist die erste Höhe des Kunststoffbehälterkörpers im Verhältnis zu der zweiten Höhe des Preformkörpers. Höhe ist hierbei eine eindimensionale Größe. Die erste Höhe des Kunststoffkörpers ist gemäß der Erfindung der erste Abstand zwischen seinem Behälterboden und seiner Unterseite des Transferrings. Die zweite Höhe des Preformkörpers ist gemäß der Erfindung der zweite Abstand zwischen seinem Boden und seiner Unterseite des Transferrings.

Die unter Druck in den Kunststoffbehälter gefüllten Fluide können flüssig oder gasförmig sein. Flüssige Fluide können beispielsweise kohlensäurehaltige Getränke wie Mineralwasser, Limonaden oder Bier sein. Gasförmige Fluide können beispielsweise Treibmittel zur Erzeugung von Aerosolen sein.

Der vorgeschlagene Kunststoffbehälter ist hierbei mittels des vorgeschlagenen Verfahrens hergestellt.

Vorteilhaft hat der Rücken des Materialwulstes eine Breite zwischen 2 und 10 mm, vorzugsweise zwischen 3 und 9 mm und besonders bevorzugt zwischen 4 und 8 mm. Materialwulste dieser Dimensionen lassen sich durch ein entsprechendes Behälter- und Preform-Design sowie einen angepassten Blasprozeß generieren.

Zweckmäßigerweise weisen die Materialwulste einen im Wesentlichen flachen Rücken auf. Dabei kann der Rücken zumindest quer zur Längserstreckung des Materialwulstes auch bombiert oder gerundet sein.

Gemäß einer besonders bevorzugten Ausführungsform ist im mittleren Drittel der Längserstreckung des Flaschenkörpers oder Behälters wenigstens ein Materialwulst vorgesehen. Durch einen solchen Materialwulst kann die Steifigkeit des Flaschenkörpers wesentlich erhöht werden.

Vorteilhaft hat der Materialwulst eine Dicke von durchschnittlich wenigstens 2,5 mm, vorzugsweise wenigstens 3 mm und besonders bevorzugt wenigstens 3,5 mm. Solche Materialwülste mit den vorgenannten Dicken führen zu einer gezielten Versteifung der mit Materialwulsten ausgestatteten Kunststoffbehälterwandungsbereiche. Die Bestimmung der durchschnittlichen Dicke des Materialwulstes erfolgt, indem mehrere Materialdicken entlang der Längserstreckung des Wulstes bestimmt und gemittelt werden.

Vorzugsweise hat der Materialwulst im Querschnitt die Gestalt eines Trapezes oder eines Ovals. Denkbar sind jedoch auch Querschnitte einer anderen Geometrie, wie z.B. ein im Wesentlichen kreisrunder Querschnitt oder ein rechtwinkliger Querschnitt mit abgerundeten Kanten. An der Behälterinnenseite kann der Materialwulst im Querschnitt konkav oder konvex sein.

Der Behälterkörper und der Behälterboden können durch einen eine Standfläche definierenden, ringförmigen Randabschnitt miteinander verbunden sein.

Gemäß einer bevorzugten Ausführungsform ist der Behälterboden im Wesentlichen konkav ausgebildet und weist eine Mehrzahl von sich im Wesentlichen in radialer Richtung erstreckenden Materialwulsten oder Materialverdickungen auf. Es können in Abhängigkeit der Behälterbodenausformung 3,4, 5,6,7,.8 oder mehr Materialwulste vorgesehen sein.

Vorteilhaft umfasst der Behälterboden wenigstens einen konkaven Bereich und wenigstens einen konvexen Bereich, wobei der wenigstens eine konvexe Bereich durch den Materialwulst gebildet ist. Der wenigstens eine Materialwulst ragt aus der Behälterbodenoberfläche heraus. Zweckmäßigerweise ist der wenigstens eine Materialwulst im Längsschnitt konvex, d.h. nach außen gewölbt. Der wenigstens eine Materialwulst verstrebt den konkaven Behälterboden und verhindert so ein Ausbeulen desselben unter dem Behälterinnendruck des Füllgutes, z.B. eines Getränks. Vorzugsweise ist in einer Mitte des Behälterbodens ein abgeflachter oder ein nach außen gewölbter Bereich vorgesehen. In diesem zentralen Bereich kann der Anspritzpunkt für den Prefrom vorgesehen sein. Zweckmäßigerweise ist zwischen dem nach außen gewölbten, vorzugsweise kreisförmigen Bereich und dem wenigstens einen konkaven Bereich eine erste ringförmige Vertiefung vorgesehen. Eine zweite ringförmige Vertiefung kann zwischen dem ringförmigen Randabschnitt und den konkaven Bereichen vorgesehen sein. Diese ringförmigen Vertiefungen sorgen für eine nicht direkte Krafteinleitung in die von einem Biegemoment belasteten Randbereiche. Vielmehr kann durch die wenigstens eine ringförmige Vertiefung, die zwischen dem ringförmigen Randabschnitt und dem Behälterboden angeordnet sein kann, die in den (in der Regel zum Behälterinnenraum gewölbten) Behälterboden eingeleitete Kraft gefedert oder gedämpft in die an die ringförmige Vertiefung angrenzenden und dem Behälterboden benachbarten Wandungsbereiche des Kunststoffbehälters eingeleitet werden. Als besonders vorteilhaft hat es sich erwiesen, wenn der Behälterboden durch die ringförmige Vertiefung vom restlichen Kunststoffbehälter getrennt ist, die ringförmige Vertiefung somit umlaufend ausgebildet ist. Der im Behälterboden als Verstärkung ausgebildete, wenigstens eine Materialwulst endet damit innerhalb des Behälterbodens. Durch eine entsprechende Ausgestaltung der wenigstens einen ringförmigen Vertiefung in Abhängigkeit des verwendeten Kunststoffmaterials kann erreicht werden, dass die auf die Wandungsbereiche wirkenden Kräfte nicht in den konkaven Bodenbereich eingeleitet werden. Auch kann die ringförmige Vertiefung im Querschnitt gesehen stufenförmig ausgebildet sein, also mehrere aneinander angrenzende ringförmige Vertiefungen besitzen.

Vorteilhaft ist zwischen der ersten ringförmigen Vertiefung und einem inneren Ende des wenigstens einen Materialwulstes ein erster Ringabschnitt, und zwischen der zweiten ringförmigen Vertiefung und einem äußeren Ende des wenigstens einen Materialwulstes ein zweiter Ringabschnitt vorgesehen. Diese Ringabschnitte trennen den wenigstens einen Materialwulst vom ringförmigen Randabschnitt und verhindern so, dass eine durch einen hohen Innendruck bewirkte Deformation des konkaven Bodens sich auf die Standfläche auswirkt. Die Bestimmung der Dicke des konkaven Bereichs erfolgt vorzugsweise wenigstens 3 mm, noch besser wenigstens 5 mm, und besonders bevorzugt wenigstens 8 mm von der Mittelachse des Materialwulstes entfernt.

Eine Dicke des wenigstens einen Materialwulstes des Kunststoffbehälters ist, gemessen im mittleren Drittel der Längserstreckung des Materialwulstes, um wenigstens 40%, vorzugsweise um wenigstens 60% und besonders bevorzugt um wenigstens 80% größer als eine Wandstärke des wenigstens einen konkaven Bereichs.

Ausführungsbeispiele der Erfindung werden nun unter Bezugnahme auf die Zeichnungen beschrieben.
- Figur 1: zeigt von links nach rechts einen vorgeschlagenen Herstellungsprozess eines als Kunststoffflasche ausgebildeten vorgeschlagenen Kunststoffbehälters mit einem ringförmigen Verstärkungselement, welches als ein Materialwulst ausgehend von einem Preform ausgebildet ist;
- Figur 2: zeigt von links nach rechts einen vorgeschlagenen Herstellungsprozess einer Kunststoffflasche mit einem durch Materialwülste verstärkten Behälterboden;
- Figur 3: zeigt eine Draufsicht auf den Behälterboden einer Blasformkavität;
- Figur 4: zeigt eine Ausführungsform eines Behälterbodens mit sternförmig angeordneten Materialwülsten;
- Figur 5: zeigt einen Kunststoffbehälter mit einem Behälterboden;
- Figur 6: zeigt den Behälterboden von Fig. 4 im Schnitt entlang der Line ZZ;
- Figur 7: zeigt den Behälterboden von Fig. 4 im Schnitt entlang der Line YY;
- Figur 8: zeigt den Behälterboden von Fig. 4 im Schnitt entlang der Line XX;
- Figur 9: zeigt eine Detailansicht einer Standfläche des Kunststoffbehälters von Fig. 4;
- Figur 10: zeigt eine Detailansicht des Materialwulstes; und
- Figur 11: zeigt eine Unteransicht des vorgeschlagenen Behälterbodens.

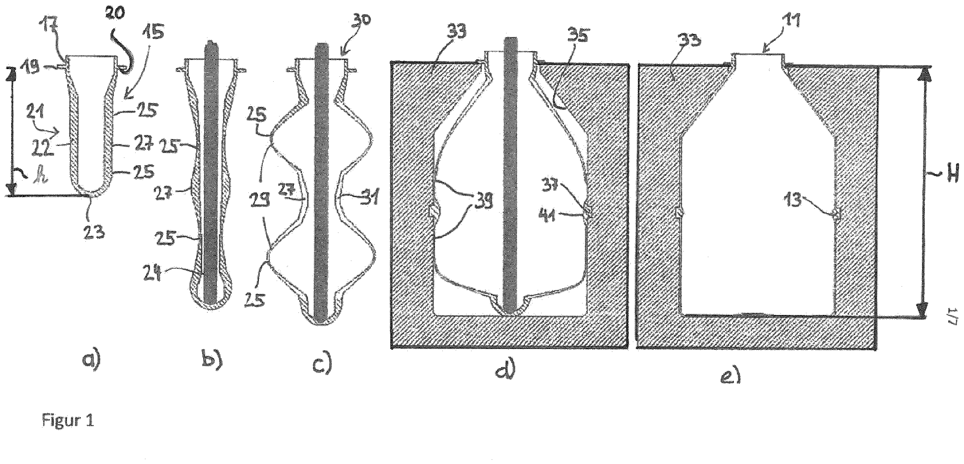

In Fig. 1 ist ein vorgeschlagener Herstellungsprozess eines streckblasgeformten als Kunststoffflasche ausgebildeten Kunststoffbehälters 11 mit einem umlaufenden Verstärkungselement, welches als ein Materialwulst 13 ausgebildet ist, gezeigt. Ausgegangen wird von einem an seiner Außenseite strukturlosen Preform 15, also ohne Hinterschneidungen oder Vorsprüngen an seiner Außenseite, wie er allgemeinüblich zur Herstellung von streckblasgeformten Kunststoffflaschen 11 eingesetzt wird. Der Preform 15 besitzt einen Hals 17 mit einem Transferring 19 und einen an einer Unterseite 20 des Transferringes 19 anschließenden Preformkörper 21, welcher durch einen Boden 23 verschlossen ist. Je nachdem, wo in der herzustellenden Flasche eine Verstärkung gebildet werden soll, kann der Preform unterschiedliche Wandstärken aufweisen. Vorliegend besitzt der Preformkörper 21 eine Wand 22, die einen ersten Wandabschnitt 27 mit einer ersten Wanddicke und einen an den ersten Wandabschnitt 27 angrenzenden zweiten Wandabschnitt 25 mit einer zweiten Wanddicke besitzt, wobei die erste und die zweite Wanddicke im Idealfall gleich dick sind, oder die beiden Wanddicken einander vorzugsweise ähnlich sind, d.h. dass deren Dickenunterschied < 1 mm und vorzugsweise < 0,6 mm und besonders bevorzugt < 0,4 mm ist. Ferner besitzt die Wand 22 eine größere Wanddicke als der Boden 23.

Vor dem Streckblasvorgang wird das Material des Preforms zuerst auf eine Temperatur, welche über der Glasübergangstemperatur liegt, erwärmt. Für die Herstellung einer Flasche mit einem ringförmigen Materialwulst ungefähr in der Mitte der Flasche wird der erste Wandabschnitt 27 des Preforms weniger stark erwärmt als die beiden an den ersten Wandabschnitt 27 angrenzenden zweiten Wandabschnitte 25 darüber und darunter. Resultat der ungleichmäßigen Erwärmung des Preforms 15 ist, dass beim Recken mittels eines Reckdorns 24 der Kunststoff im ersten Wandabschnitt 27 weniger ausgedünnt wird als in den zweiten Wandabschnitten 25, sodass der Wandabschnitt 25 mit einer geringen Wandstärke und wenigstens ein erster Wandabschnitt 27 mit einer relativ zu den Wandabschntten 25 größeren Wandstärke vorliegen (Fig. 1b). Dadurch entstehen beim Blasen einer Vorblase 30 zunächst zwei voran eilende Vorblasenbereiche 29 und eine Dickstelle 31 (Fig. 1c), wobei die Dickstelle 31 gegenüber den zwei Vorblasenbereichen 29 eine Einschnürung darstellt. In Figur 1d) ist eine Blasform 33 mit einer Blasformkavität 35 gezeigt, welche der Form der herzustellenden Kunststoffflasche entspricht. Die Blasform 33 besitzt im mittleren Bereich eines herzustellenden Behälterkörpers eine umlaufende Rille 37. In diese Rille 37 wird das Material des ersten Wandabschnitts 27 beim Blasen gepresst. Gekühlte Bereiche 39 der Blasform 33 ober- und unterhalb der Rille 37 kühlen das Material in der Rille 37 ab und immobilisieren dieses (Kühlleitungen in den Figuren nicht dargestellt). Überraschenderweise kann ein in der Rille 37 angehäuftes erstes Material auch im Hauptblasprozess nicht mehr aus der Rille 37 verdrängt werden.

Das in der Rille 37 eingesperrte erste Material steht nun - obwohl noch dickwandig und heiß - nicht mehr für den restlichen Blasprozeß zur Verfügung. Ein über dem ersten Material angehäuftes zweites Material 41 über der Rille 41 ist den Zugkräften trotzdem noch ausgeliefert und verstreckt sich je nach Abkühlungsgrad und Zugkräften weiter und dünnt dabei aus, ohne jedoch hierbei das erste Material verstrecken zu können. Übrig bleibt ein aus dem ersten Wandabschnitt 27 gebildeter ringförmiger Materialwulst mit einer deutlich dickeren Materialstärke als die zum Materialwulst benachbarten zweiten Wandabschnitte 25.

Wenn eine Rippe parallel einer Behälterkörpermittelachse entstehen soll, ist dies deutlich komplexer, aber mit dieser vorgeschlagenen Technologie durchaus möglich und besonders im Behälterboden anstrebenswert.

Mit dem Bezugszeichen "H" ist eine erste Höhe bezeichnet. Die erste Höhe H des Kunststoffkörpers ist ein erster Abstand zwischen seinem Behälterboden 42 und der Unterseite 20 des Transferrings 19. Mit dem Bezugszeichen "h" ist eine zweite Höhe bezeichnet. Die zweite Höhe h des Preformkörpers 21 ist ein zweiter Abstand zwischen dem Boden 23 und der Unterseite 20 des Transferrings 19. Streckverhältnis im Sinne dieser Erfindung ist die erste Höhe H des Kunststoffbehälterkörpers im Verhältnis zu der zweiten Höhe h des Preformkörpers 21. Das Streckverhältnis ist 1,5 bis 3,5, bevorzugt 2,0 bis 3,5 oder 2,5 bis 3,5. In dem vorliegenden Ausführungsbeispiel ist das Streckverhältnis 2,0.

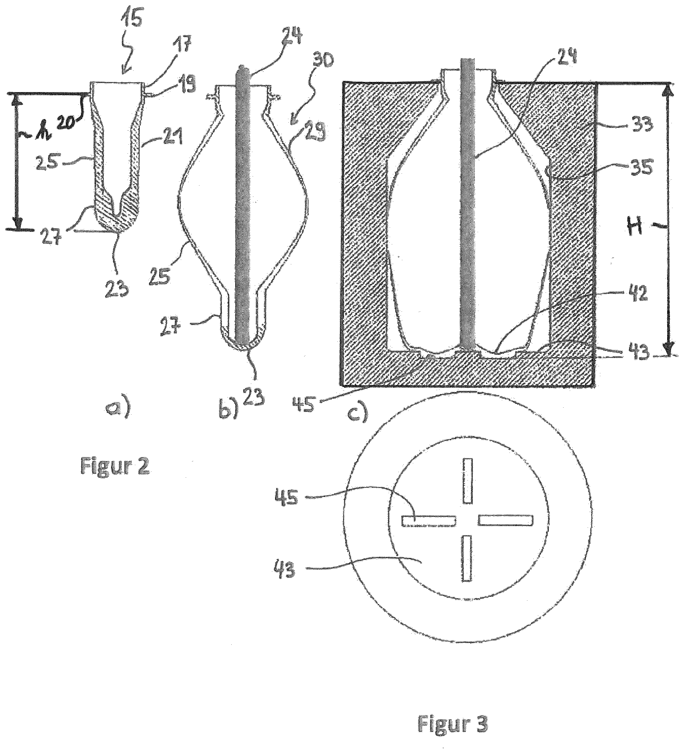

In den Figuren 2 a) bis 2c) und 3 ist die Herstellung einer Kunststoffflasche mit einem durch Materialwulste oder Materialverdickungen verstärkten Behälterboden 42 gezeigt. Die dazu eingesetzte Blasform 33 besitzt einen Blasformboden 43 mit mehreren sternförmig angeordneten Rillen 45. Eine Innenwandung des Preforms 15 in dem hier gezeigten Ausführungsbeispiel ist gestuft ausgebildet, so dass der an den Transferring 19 angrenzende zweite Wandabschnitt 25 dünner ausgebildet ist als der sich an den zweiten Wandabschnitt 25 angrenzende erste Wandabschnitt 27, der sich bis zum Boden 23 des Preforms 15 erstreckt.

Als erstes wird der Preform 15 so beheizt, dass beim Vorblasen und Recken des erwärmten Preforms 15 die Vorblase 30 derart ausgebildet ist, dass der zweite Wandabschnitt 25 beim Recken mittels des Reckdorns 24 gegenüber dem ersten Wandabschnitt 27 ausgedünnt wird. Somit entsteht ein Vorblasenbereich 29 im Wesentlichen zwischen dem ersten Wandabschnitt 27 und dem Transferring 19. Das für die Erwärmung anzulegende Temperaturprofil wird entsprechend der Wandstärkenverteilung des verwendeten Preforms 15 gewählt. Beim Streckblasprozess wird die Vorblase 30 soweit expandiert, dass das Material des Preformbodens 23 und des ersten Wandabschnitts 27 gerade die sternförmigen Rillen 45 füllt. Aus den Rillen 45 kann dieses besonders dickwandige Material nicht mehr herausgestreckt werden, während das Material zwischen den Rillen nach wie vor für den restlichen Steckblasprozeß beim Hauptblasen zur Verfügung steht.

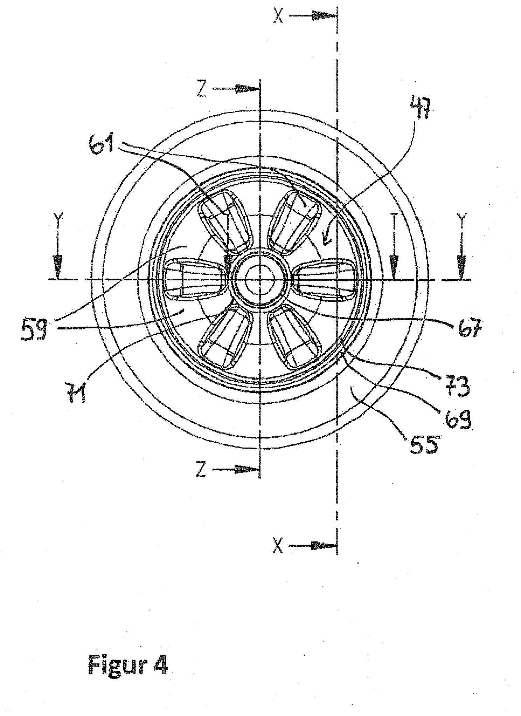

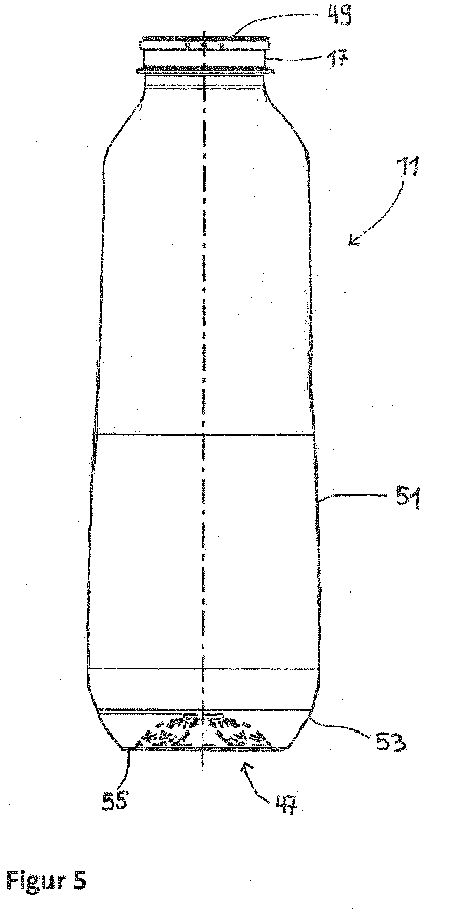

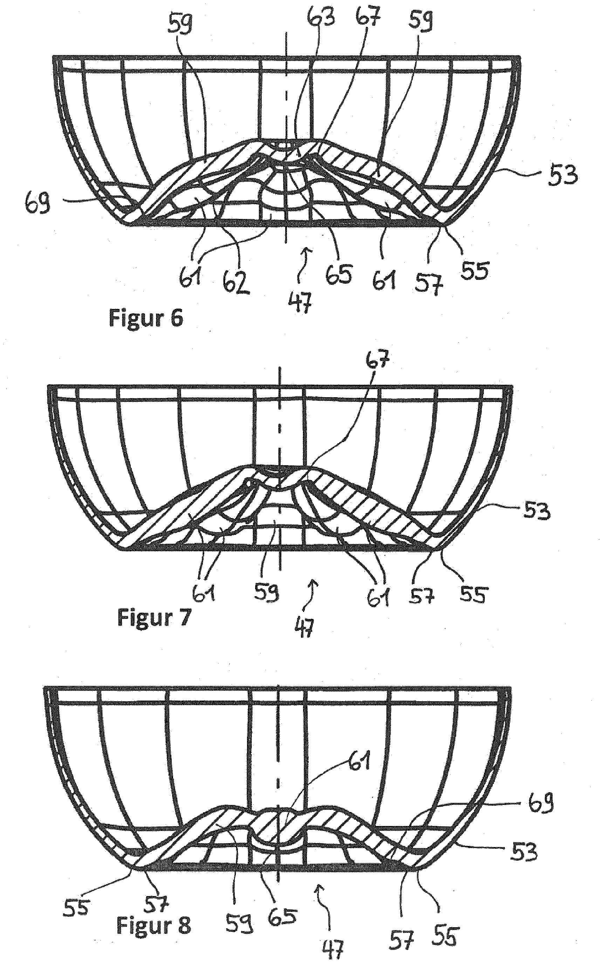

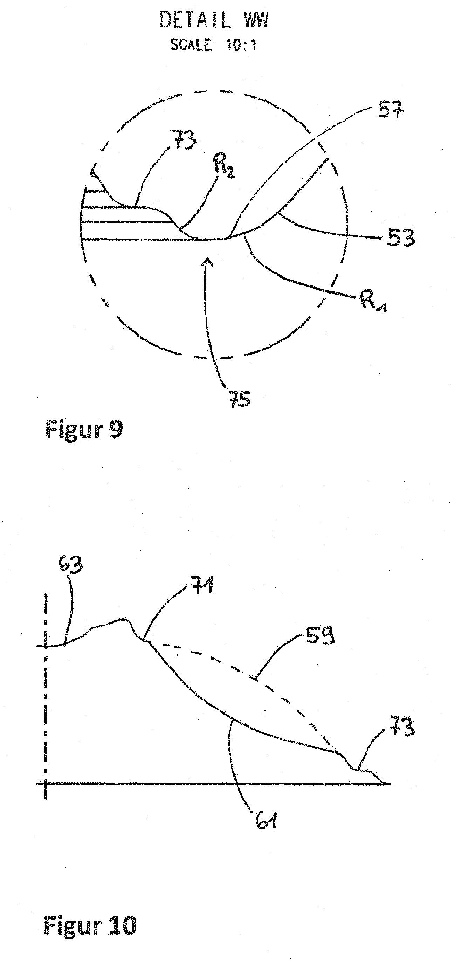

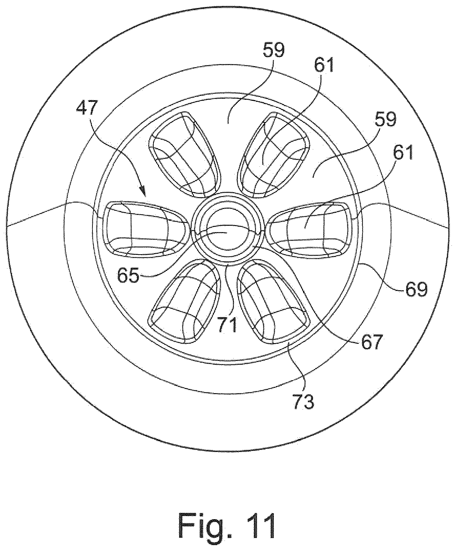

In den Figuren 4 bis 11 ist eine Kunststoffflasche 11 mit einem zweiten Ausführungsbeispiel eines besonders druckresistenten konkaven Behälterbodens 47, wie in Figur 4 dargestellt, gezeigt. Die Kunststoffflasche 11 besitzt einen Hals 17 mit einer Öffnung 49 und einen Behälterkörper 51, welcher sich an den Hals 17 anschließt. Der Behälterkörper 51 geht unten in einen nach innen gekrümmten, konvexen Fußbereich 53 über, an welchen ein ringförmiger, als Standfläche für die Kunststoffflasche 11 dienender Randabschnitt 55 anschließt. Der Randabschnitt 55 besitzt eine Krümmung 57 (Figuren 6 bis 8), welche innen in den konkaven Behälterboden 47 übergeht, wie dies gut in Figur 9 ersichtlich ist. Im Behälterboden 47 sind konkave Bereiche 59 durch sich radial erstreckende Materialwulste 61 voneinander getrennt. In der Figur 6 sieht man die konkaven Bereiche 59 und dahinter Materialwulste 61 mit einem nach außen gewölbten (konvexen) Rücken 62. In der Mitte des Behälterbodens 47 befindet sich ein ringförmiger nach außen gewölbter Bereich 63, in dessen Zentrum sich der Anspritzpunkt 65 des Preforms 15 befindet. Der Bereich 63 ist durch eine erste rillenförmige Vertiefung 67 von den konkaven Bereichen 59 getrennt. Eine zweite rillenförmige Vertiefung 69 ist zwischen dem Randabschnitt 55 und den konkaven Bereichen 59 vorgesehen. Zwischen den Materialwulsten 61 und den rillenförmigen Vertiefungen 67,69 sind jeweils noch schmale Ringabschnitte 71,73 vorhanden. Die Ringabschnitte 71,73 sind jeweils weniger als 2 mm und vorzugsweise weniger als 1 mm breit (in radialer Richtung gesehen).

Wie insbesondere aus der Detailansicht gemäß Fig. 9 hervorgeht, besitzt der konvex nach innen gekrümmte Fußbereich 53 einer im Wesentlichen kreiszylindrisch ausgebildeten Kunststoffflasche 11 benachbart zu einer ringförmigen Standfläche 75, welche sich senkrecht zur Behälterlängsachse erstreckt, einen Radius R₁, und der konkave Behälterboden 47 hat benachbart zur ringförmigen Standfläche 47 einen Radius R₂, wobei der Radius R₁ mindestens doppelt so groß ist wie der Radius R₂.

Für die Herstellung der vorgeschlagenen Kunststoffflaschen 11 wird vorzugsweise ein PET mit einer intrinsischen Viskosität zwischen 0,83 und 1,3 dl/g und einem Copolymer-Gehalt zwischen 2 und 10 Gew.%, vorzugsweise zwischen 4 und 6 Gew.-% und besonders bevorzugt zwischen 4,5 und 5,5 Gew.-% eingesetzt. Die intrinsische Viskosität wird gemäß ISO 1628T5 gemessen. Lösemittel ist das Gemisch Phenol/1,2-Dichlorbenzol im Mischungsverhältnis 1:1. Die Messtemperatur ist 25°C.

Zur Herstellung des Ausgangspolymers wird vorzugsweise anstelle von Monoethylenglykol teilweise Diethylenglykol verwendet. Auch kann anstelle der Terephtalsäure teilweise Isophtalsäure verwendet werden. Dadurch ergibt sich ein Polymer welches weniger stark kristallisiert und dickwandigere Preforms zulässt, die ansonsten in den Spritzwerkzeugen bei Wandstärken über 4,4mm üblicherweise durch eine zu langsame Auskühlung kristallisieren würden.

Zur Herstellung einer druckstabilen Kunststoffflasche wird ein Preform mit einer Wandstärke von wenigstens 4 mm Wandstärke eingesetzt, dessen Boden graduell oder in einer oder mehreren Stufen verdickt wurde und dort eine Wandstärke über 4,4mm aufweist, vorzugsweise jedoch eine Wandstärke zwischen 5,5 und 6,5mm hat.

### Legende

- 11: als Kunststoffflasche ausgebildeter Kunststoffbehälter
- 13: Verstärkungselement, Materialwulst
- 15: Preform
- 17: Hals
- 19: Transferring
- 20: Unterseite
- 21: Preformkörper
- 22: Wand des Preforms
- 23: Boden
- 24: Reckdorn
- 25: zweiter Wandabschnitt
- 27: erster Wandabschnitt
- 29: Vorblasenbereich
- 30: Vorblase
- 31: Dickstelle
- 33: Blasform
- 35: Blasformkavität
- 37: Rille der Blasform
- 39: gekühlte Bereiche der Blasform benachbart der Rille
- 41: Material über der Rille (Materialwulst)
- 42: Behälterboden
- 43: Blasformboden
- 45: Rille des Flaschenbodens
- 47: konkaver Behälterboden
- 49: Öffnung der Flasche
- 51: Behälterkörper
- 53: nach innen gekrümmter Fußbereich
- 55: ringförmiger Randabschnitt
- 57: Krümmung des Randabschnitts
- 59: konkaver Bereich
- 61: sich radial erstreckender Materialwulst
- 62: Rücken des Materialwulstes
- 63: nach aussen gewölbter, zentraler Bereich
- 65: Anspritzpunkt
- 67: erste rillenförmige Vertiefung
- 69: zweite rillenförmige Vertiefung
- 71: Ringabschnitt zwischen Materialwulst und erster rillenförmiger Vertiefung
- 73: Ringabschnitt zwischen Materialwulst und zweiter rillenförmiger Vertiefung
- 75: Standfläche
- H: Erste Höhe h zweite Höhe

## Patentansprüche

1. Verfahren zur Herstellung eines blasgeformten Kunststoffbehälters (11) ausgehend von einem Preform (15), dessen Preformkörper (21), der sich an einen Hals (17) des Preforms (15) anschließt, an seiner Innenseite und Außenseite strukturlos ist, also frei von Vorsprüngen und Hinterschneidungen, mit folgenden Verfahrensschritten:
a) Bereitstellen eines Preforms (15) mit einem ersten Wandabschnitt (27) und einem an den ersten Wandabschnitt (27) angrenzenden zweiten Wandabschnitt (25);
b) Erwärmen des Preforms (15);
c) Transfer des erwärmten Preforms (15) in eine Kavität (35) einer Blasform;
d) Vorblasen und/oder Recken des erwärmten Preforms (15) zu einer Vorblase (30); und
e) Hauptblasen der Vorblase (30) zu einem Kunststoffbehälter (11), wobei,
f) eine Blasform (33) bereitgestellt wird, deren Kavität (35) an einer zu verstärkenden Stelle des Kunststoffbehälters (11) wenigstens eine Rille (37, 45) aufweist,
**dadurch gekennzeichnet,**
g) **dass** ein für die Erwärmung anzulegendes Temperaturprofil entsprechend der Wandstärkenverteilung des Preforms (15) gewählt wird, sodass der mit der wenigstens einen Rille (37, 45) der Kavität (35) korrelierende erste Wandabschnitt (27) beim Recken und/oder Vorblasen weniger ausgedünnt wird als der zweite Wandabschnitt (25), und
h) **dass** beim Hauptblasen eine Anhäufung von Kunststoffmaterial durch den ersten Wandabschnitt (27) in der wenigstens einen Rille (37,45) bewirkt wird.

2. Verfahren nach Anspruch 1, **dadurch gekennzeichnet, dass** in die Kavität (35) die wenigstens eine Rille (37, 45) mit einer Breite von maximal 10 mm Breite, vorzugsweise maximal 7 mm Breite und besonders bevorzugt maximal 5 mm Breite eingearbeitet wird.

3. Verfahren nach Anspruch 1 oder 2, **dadurch gekennzeichnet, dass** eine Wanddickenvergrößerung zwischen der Innenseite und der Außenseite des Preformkörpers entlang einer Mittelachse des Preformkörpers mit zunehmenden Abstand von einem an den Preformkörper angrenzenden Transferring ausgebildet ist.

4. Blasgeformter Kunststoffbehälter (11), insbesondere zur Bevorratung von unter Druck stehenden Fluiden, der aus einem Preform (15), dessen Preformkörper (21), der sich an einen Hals (17) des Preforms (15) anschließt, an seiner Innenseite und an seiner Außenseite strukturlos ist, also frei von Vorsprüngen und Hinterschneidungen, mit einem Streckverhältnis von 1,5 bis 3,5 gemäss dem Verfahren nach einem der Ansprüche 1-3 hergestellt ist, wobei der Kunststoffbehälter (11) mit
a) einem Behälterboden (47),
b) einem an den Behälterboden anschließenden Behälterkörper (51) und
c) einem den Behälterkörper (51) abschließenden Hals (17) mit einer Öffnung (49) ausgeführt ist, wobei der Hals (17) dem Behälterboden (47) im Wesentlichen gegenüberliegt,
wobei wenigstens eine Komponente aus der Gruppe von Behälterkörper (51) und Behälterboden (47) wenigstens ein Verstärkungselement mit einer ersten Wanddicke aufweist,
**dadurch gekennzeichnet,**
**dass** das wenigstens eine Verstärkungselement als ein nach aussen ragender Materialwulst (13; 61) ausgebildet ist, wobei die erste Wanddicke wenigstens 30%, vorzugsweise wenigstens 50% und besonders bevorzugt wenigstens 70% grösser als eine zweite Wandstärke eines an den wenigstens einen Materialwulst (13; 61) angrenzenden Wandungsbereichs ist.

5. Kunststoffbehälter nach Anspruch 4, **dadurch gekennzeichnet, dass** im mittleren Drittel der Längserstreckung des Behälterkörpers wenigstens ein Materialwulst (41) vorgesehen ist.

6. Kunststoffbehälter nach Anspruch 4 oder 5, **dadurch gekennzeichnet, dass** der Materialwulst (13; 61) eine Dicke von wenigstens 2,5 mm, vorzugsweise wenigstens 3 mm und besonders bevorzugt wenigstens 3,5 mm hat.

7. Kunststoffbehälter nach einem der Ansprüche 4 bis 6, **dadurch gekennzeichnet, dass** der wenigstens eine Materialwulst (13; 61) an einer Behälterinnenseite im Querschnitt konkav ist.

8. Kunststoffbehälter nach einem der Ansprüche 4 bis 7, **dadurch gekennzeichnet, dass** der wenigstens eine Materialwulst (13; 61) an einer Behälterinnenseite im Querschnitt konvex ist.

9. Kunststoffbehälter nach einem der Ansprüche 4 bis 8, **dadurch gekennzeichnet, dass** der Behälterkörper und der Behälterboden (47) durch einen eine Standfläche (75) definierenden, ringförmigen Randabschnitt (55) miteinander verbunden sind.

10. Kunststoffbehälter nach einem der Ansprüche 4 bis 9, **dadurch gekennzeichnet**, der Behälterboden im Wesentlichen konkav ausgebildet ist und eine Mehrzahl von sich im Wesentlichen in radialer Richtung erstreckenden Materialwulsten (61) aufweist.

11. Kunststoffbehälter nach einem der Ansprüche 4 bis 10, **dadurch gekennzeichnet, dass** der Behälterboden wenigstens einen konkaven Bereich (59) und wenigstens einen konvexen Bereich (61) umfasst, wobei der wenigstens eine konvexe Bereich durch den Materialwulst gebildet ist.

12. Kunststoffbehälter nach einem der Ansprüche 4 bis 11, **dadurch gekennzeichnet, dass** in einer Mitte des Behälterbodens ein nach außen gewölbter Bereich (63) vorgesehen ist.

13. Kunststoffbehälter nach Anspruch 12, **dadurch gekennzeichnet, dass** zwischen dem nach außen gewölbten Bereich (63) und dem wenigstens einen konkaven Bereich (59) eine erste ringförmige Vertiefung (67) vorgesehen ist.

14. Kunststoffbehälter nach einem der Ansprüche 9 bis 13, **dadurch gekennzeichnet, dass** zwischen dem ringförmigen Randabschnitt (55) und dem wenigstens einen konkaven Bereich (59) eine zweite ringförmige Vertiefung (69) vorgesehen ist.

15. Kunststoffbehälter nach Anspruch 14, **dadurch gekennzeichnet, dass** zwischen der zweiten ringförmigen Vertiefung (69) und einem äußeren Ende des wenigstens einen Materialwulst (61) ein zweiter Ringabschnitt (73) vorgesehen ist.

## Claims

1. A method for producing a blow-molded plastic container (11) starting from a preform (15), which preform body (21) connecting to a neck (17) of the preform (15) has no structure at its inside and its outside, thus is free of protrusions or undercuts, comprising the following method steps:
a) providing a preform (15) having a first wall section (27) and a second wall section (25) adjacent to the first wall section (27);
b) heating the preform (15);
c) transferring the heated preform (15) into a cavity (35) of a blow mold;
d) pre-blowing and/or stretching the heated preform (15) to a pre-blow (30); and
e) main-blowing the pre-blow (30) into a plastic container (11), wherein
f) a blow mold (33) is provided, which cavity (35) has at a to-be-reinforced location of the plastic container (11) at least one groove (37, 45);
**characterized in that**
g) a heat profile to be established for heating is selected respective of the wall thickness distribution of the preform (15) in such a manner that the first wall section (27) correlating with the at least one groove (37, 45) of cavity (35) is thinned to a lesser extent when stretching and/or pre-blowing than the second wall section (25); and
h) an accumulation of plastic material by the first wall section (27) in the at least one groove (37, 45) is affected during main-blowing.

2. The method according to Claim 1, **characterized in that** the at least one groove (37, 45) having a maximum width of 10 mm, preferably a maximum width of 7 mm and with particular preference a maximum width of 5 mm, is worked into the cavity (35).

3. The method according to one of Claims 1 or 2, **characterized in that** an increase of the wall thickness between the inside and the outside of the preform body along a middle axis of the preform body is formed at an increasing distance from a transfer ring adjacent to the preform body.

4. A blow molded plastic container (11), in particular, for storing pressurized fluids, which is, having a stretch ratio of 1.5 to 3.5, produced by a method as claimed in any one of claims 1 to 3 starting from a preform (15), which preform body (21) connecting at a neck (17) of a preform (15) has no structure at its inside and at its outside, thus is free of protrusions or undercuts, wherein the plastic container (11) comprises
a) a container bottom (47);
b) a container body (51) connecting to the container bottom; and
c) a neck (17) connecting to the container body (51) having an opening (49), wherein the neck (17) is substantially located opposite of the container bottom (47),
wherein at least one component from the group of container body (51) and container bottom (47) has at least one reinforcing element having a first wall thickness,
**characterized in that**
at least one reinforcing element is formed as an outwardly protruding material bead (13; 61), wherein the first wall thickness is at least 30% greater, preferably at least 50% greater and with particular preference at least 70% greater, than a second wall thickness of a wall area adjacent to the at least one material bead (13; 61).

5. The plastic container according to one of Claim 4, **characterized in that** at least one material bead (41) is provided in the middle third of the longitudinal extension of the container body.

6. The plastic container according to one of Claims 4 or 5, **characterized in that** the material bead (13; 61) has a thickness of at least 2.5 mm, preferably of at least 3mm and with particular preference of at least 3.5 mm.

7. The plastic container according to one of Claims 4 to 6, **characterized in that** the at least one material bead (13; 61) is concave in cross section at a container inside.

8. The plastic container according to one of Claims 4 to 7, **characterized in that** the at least one material bead (13; 61) is convex in cross section at a container inside.

9. The plastic container according to one of Claims 4 to 8, **characterized in that** the container body and the container bottom (47) are connected to each other by an annular edge portion (55) defining a standing surface (75).

10. The plastic container according to one of Claims 4 to 9, **characterized in that** the container bottom is substantially formed in a concave manner and has a plurality of material beads (61) substantially extending in radial direction.

11. The plastic container according to one of Claims 4 to 10, **characterized in that** the container bottom comprises at least one concave area (59) and at least one convex area (61), wherein the at least one convex area is formed by the material bead.

12. The plastic container according to one of Claims 4 to 11, **characterized in that** an outwardly curved area (63) is provided in the middle of the container bottom.

13. The plastic container according to Claim 12, **characterized in that** a first annular recess (67) is provided between the outwardly cambered area (63) and the at least one concave area (59).

14. The plastic container according to one of Claims 9 to 13, **characterized in that** a second annular recess (69) is provided between the annular edge portion (55) and the at least one concave area (59).

15. The plastic container according to Claim 14, **characterized in that** a second ring section (73) is provided between the second annular recess (69) and an exterior end of the at least one material bead (61).

## Revendications

1. Procédé pour la fabrication d'un récipient en plastique formé par soufflage (11) à partir d'une préforme (15) dont le corps de préforme (21) qui se rattache à un col (17) de la préforme (15), est sans structure sur sa face intérieure et sa face extérieure et est donc exempt de saillies et de contre-dépouilles, avec les étapes de procédé suivantes :
a) Mise à disposition d'une préforme (15) avec une première section de paroi (27) et une seconde section de paroi (25) adjacente à la première section de paroi (27) ;
b) réchauffement de la préforme (15) ;
c) transfert de la préforme réchauffée (15) dans une cavité (35) d'un moule de soufflage ;
d) présoufflage et/ou étirage de la préforme réchauffée (15) en une forme présoufflée (30) et
e) soufflage principal de la forme présoufflée (30) en un récipient en plastique (11)
cependant
f) qu'une forme de soufflage (33) est mise à disposition dont la cavité (35) présente, à un endroit à renforcer du récipient en plastique (11) au moins une rainure (37, 45)
**caractérisé en ce**
g) **qu'**un profil de température à appliquer pour le réchauffement est sélectionné selon la répartition de l'épaisseur de paroi de la préforme (15) si bien que la première section de paroi (27) en corrélation avec la au moins une rainure (37, 45) de la cavité (35) est moins amincie lors de l'étirage et/ou du présoufflage que la seconde section de paroi (25) et
h) **que**, lors du soufflage principal, une accumulation de matière plastique est causée par la première section de paroi (27) dans la au moins une rainure (37, 45).

2. Procédé selon la revendication 1, **caractérisé en ce que** la au moins une rainure (37, 45) est incorporée dans la cavité (35) avec une largeur d'au maximum 10 mm, de préférence d'au maximum 7 mm et de manière particulièrement préférée d'au maximum 5 mm.

3. Procédé selon la revendication 1 ou 2, **caractérisé en ce qu'**un agrandissement de l'épaisseur de paroi entre la face intérieure et la face extérieure du corps de préforme est configurée le long d'un axe médian du corps de préforme avec un écart croissant par un anneau de transfert adjacent au corps de préforme.

4. Récipient en plastique formé par soufflage (11), en particulier pour le stockage de fluides sous pression, qui est fabriqué à partir d'une préforme (15) dont le corps de préforme (21) qui se rattache à un col (17) de la préforme (15) est sans structure sur sa face intérieure et sur sa face extérieure et est donc exempt de saillies et de contre-dépouilles, avec un rapport d'étirage de 1,5 à 3,5 selon le procédé selon l'une des revendications 1 à 3, cependant que le récipient en plastique (11) est réalisé avec
a) un fond de récipient (47),
b) un corps de récipient (51) qui se rattache au fond de récipient et
c) un col (17) qui termine le corps de récipient (51) avec une ouverture (49), le col (17) étant sensiblement opposé au fond du récipient (47),
cependant qu'au moins un composant du groupe du corps de récipient (51) et du fond du récipient (47) présente au moins un élément de renforcement avec une première épaisseur de paroi,
**caractérisé en ce**
**que** le au moins un élément de renforcement est configuré comme un bourrelet de matière (13 ; 61) qui fait saillie vers l'extérieur, cependant que la première épaisseur de paroi est supérieure d'au moins 30%, de préférence d'au moins 50% et de manière particulièrement préférée d'au moins 70% à une seconde épaisseur de paroi d'une zone de paroi adjacente au au moins un bourrelet de matière (13 ; 61).

5. Récipient en plastique selon la revendication 4, **caractérisé en ce qu'**il est prévu au moins un bourrelet de matière (41) dans le tiers médian de l'extension longitudinale du corps de récipient.

6. Récipient en plastique selon la revendication 4 ou 5, **caractérisé en ce que** le bourrelet de matière (13 ; 61) a une épaisseur d'au moins 2,5 mm, de préférence d'au moins 3 mm et de manière particulièrement préférée d'au moins 3,5 mm.

7. Récipient en plastique selon l'une des revendications 4 à 6, **caractérisé en ce que** le au moins un bourrelet de matière (13 ; 61) est de section concave sur une face intérieure du récipient.

8. Récipient en plastique selon l'une des revendications 4 à 7, **caractérisé en ce que** le au moins un bourrelet de matière (13 ; 61) est de section convexe sur une face intérieure du récipient.

9. Récipient en plastique selon l'une des revendications 4 à 8, **caractérisé en ce que** le corps du récipient et le fond du récipient (47) sont reliés l'un à l'autre par une portion de bord annulaire (55) qui définit une surface de pose (75).

10. Récipient en plastique selon l'une des revendications 4 à 9, **caractérisé en ce que** le fond du récipient est de configuration sensiblement concave et présente une multitude de bourrelets de matière (61) qui s'étendent sensiblement dans le sens radial.

11. Récipient en plastique selon l'une des revendications 4 à 10, **caractérisé en ce que** le fond du récipient comprend au moins une zone concave (59) et au moins une zone convexe (61), la au moins une zone convexe étant formée par le bourrelet de matière.

12. Récipient en plastique selon l'une des revendications 4 à 11, **caractérisé en ce qu'**il est prévu une zone voûtée vers l'extérieur (63) dans un milieu du fond du récipient.

13. Récipient en plastique selon la revendication 12, **caractérisé en ce qu'**il est prévu un premier évidement annulaire (67) entre la au moins une zone voûtée vers l'extérieur (63) et la au moins une zone concave (59).

14. Récipient en plastique selon l'une des revendications 9 à 13, **caractérisé en ce qu'**il est prévu un second évidement annulaire (69) entre la portion de bord annulaire (55) et la au moins une zone concave (59).

15. Récipient en plastique selon la revendication 14, **caractérisé en ce qu'**il est prévu une seconde portion annulaire (73) entre le second évidement annulaire (69) et une extrémité extérieure du au moins un bourrelet de matière (61).
